(19) Europäisches Patentamt
European Patent Office
Office européen des brevets

(11) Veröffentlichungsnummer: **0 316 389 B1**

(12) **EUROPÄISCHE PATENTSCHRIFT**

(45) Veröffentlichungstag der Patentschrift:
02.10.91 Patentblatt 91/40

(51) Int. Cl.⁵: **B28D 1/12**

(21) Anmeldenummer: **88904476.4**

(22) Anmeldetag: **25.05.88**

(86) Internationale Anmeldenummer:
**PCT/DE88/00308**

(87) Internationale Veröffentlichungsnummer:
**WO 88/09251 01.12.88 Gazette 88/26**

(54) **Bandsägemaschine.**

(30) Priorität: 27.05.87 DE 3717962
13.06.87 DE 3719854
09.11.87 DE 3738017
26.01.88 DE 3802119
27.02.88 DE 3806235

(43) Veröffentlichungstag der Anmeldung:
**24.05.89 Patentblatt 89/21**

(45) Bekanntmachung des Hinweises auf die
Patenterteilung:
**02.10.91 Patentblatt 91/40**

(84) Benannte Vertragsstaaten:
**AT BE CH DE FR GB IT LI LU NL SE**

(56) Entgegenhaltungen:
CH-A- 316 478
CH-A- 1 933 230
DE-A- 1 949 194
DE-A- 3 137 894
DE-B- 1 088 408

(56) Entgegenhaltungen:
DE-B- 1 118 086
DE-B-10 841 190
FR-A- 924 624
FR-A- 2 249 754
FR-E- 74 920
US-A- 1 736 608
US-A- 2 912 968
US-A- 2 958 348
US-A- 3 402 627

(73) Patentinhaber: **MVZ MASCHINENBAU UND VERZAHNUNGSTECHNIK, JOHANNES FALKENSTEIN**
**Zeppelinstrasse 16**
**W-7953 Bad Schussenried (DE)**

(72) Erfinder: **FALKENSTEIN, Johannes**
**Zeppelinstrasse 16**
**W-7953 Bad Schussenried (DE)**

(74) Vertreter: **Patentanwälte Dipl.-Ing. E. Eisele Dr.-Ing. H. Otten**
**Seestrasse 42**
**W-7980 Ravensburg (DE)**

## Beschreibung

Die Erfindung betrifft eine Bandsägemaschine zur Bearbeitung von Steinmaterialien nach dem Oberbegriff des Anspruchs 1.

Zur Bearbeitung von Materialien aus Naturstein, wie z.B. Marmor, Granit o.dgl. werden Bandsägemaschinen mit einem diamantbeschichteten endlosen, über Umlenkrollen geführten Bandsägeblatt oder auch endlose Seilsägen mit aufgebrachten, diamantbeschichteten Schneidperlen verwendet. Das Bandsägeblatt besteht aus kaltgewalztem Schnellarbeitsstahl, legiertem Stahl bzw. Federbandstahl, welches flach über die Umlenkrollen läuft (US-A-3402627). Die Diamantbestückung erfolgt durch stirnseitiges Auflöten von diamantbestückten Schneid- oder Schleifelementen, so daß sich ein Sägeband mit Schneid- oder Schleifsegmenten ergibt. Das Grundmaterial des Bandsägeblatts weist eine hohe Festigkeit und Biegsamkeit auf, ist jedoch außerordentlich spröde, knickempfindlich mit geringer Kerbschlagzähigkeit. Durch das Lötverfahren zum stirnseitigen Aufbringen der Schneid/Schleifsegmente wird das Bandmaterial zusätzlich beansprucht. Beim Einsatz in der Paxis, insbesondere beim Konturenschneiden von Steinmaterialien kommt es deshalb sehr häufig zu Querrissen im Bereich der aufgebrachten Diamantsegmente, was zum irreparablen Bruch des Bandsägeblatts führt. Durch die Diamantbestückung sind derartige Bandsägeblätter jedoch außerordentlich teuer, so daß ein Bruch des Grundmaterials mit der aufgebrachten Diamantbestückung stets ein großer Verlust ist.

Aus der DE-A-1088408 ist weiterhin eine Bandsägemaschine bekannt geworden, die ebenfalls zur Steinbearbeitung dient. Hierfür läuft ein endloses Kunststoffband oder Gummiträgerband mit seiner schmalen inneren Stirnseite über die beiden Umlenkrollen. Die Schneidelemente selbst sind auf einem Sägeseil aufgereiht und an der gegenüberliegenden, äußeren Stirnseite befestigt. Das Trägerband muß demnach in Stirnseitenrichtung, d.h. in Schnittrichtung flexibel ausgebildet sein, damit es über die Umlenkrollen geführt werden kann. Im Bereich der Schnittstelle muß das Trägerband deshalb grundsätzlich eine innenliegende Versteifung als Abstützung aufweisen.

Eine prinzipiell ähnliche Anordnung ist auch aus der US-A-2912968 bekannt, die eine Kettensäge zeigt. Hier wird das Trägerband für die Schneidelemente durch eine umlaufende endlose Kette gebildet. Die Schneidelemente sind wiederum an der biegsamen Stirnflächen angebracht, d.h. der Schnittdruck muß durch eine Versteifungsvorrichtung abgestützt werden.

In beiden oben genannten Druckschriften liegt demnach die Schnittrichtung in der Ebene der Umlenkrollen.

Der Erfindung liegt die Aufgabe zugrunde, eine Bandsägemaschine mit Bandsägeblatt oder auch Kettensägeband zu schaffen, welches hohe Standzeiten aufweist und auch bei verschlissenen bzw. verbrauchten Diamantsegmenten bzw. Schneid- oder Schleifelementen wieder verwendbar ist. Dies gilt sinngemäß auch für hartmetallbestückte Sägewerkzeuge.

Diese Aufgabe wird ausgehend von einer Bandsägemaschine der einleitend bezeichnenden Art erfindungsgemäß durch die kennzeichnenden Merkmale des Anspruchs 1 gelöst.

Durch die in den weiteren Ansprüchen aufgeführten Maßnahmen ist eine vorteilhafte Weiterbildung und Verbesserung des erfindungsgemäßen Sägewerkzeugs möglich.

Die vorliegende Erfindung hat gegenüber bekannten Bandsägemaschinen den Vorteil, daß die Schneid- bzw. Schleifelemente direkt oder indirekt mit dem Trägermaterial vorzugsweise lösbar verbunden sind. Dabei ist es unerheblich, ob das Trägermaterial ein Bandsägeblatt oder ein Kettensägeband ist. Die lösbare Verbindung zwischen dem Schneidelement und dem Trägermaterial geschieht vorzugsweise über eine Halterung oder über Halterungsmaßnahmen für das Schneidelement. In einer bevorzugten Ausführungsform erfolgt die Verbindung der Halterung mit dem Trägermaterial über eine Kunststoffeinbettung, wobei das Trägermaterial selbst aus Kunststoff bestehen kann. Im Falle einer festen Verbindung zwischen Halterung und Trägermaterial sind die Diamantschneid- bzw. Schleifelemente vorzugsweise lösbar mit der Halterung verbunden. Der Vorteil dieser Verbindungsart mit dem Trägermaterial besteht darin, daß keine thermische Beanspruchung durch ein Lötverfahren zur Befestigung der Diamantbestückung im herkimmlichen Sinne gegeben ist. Hierdurch bleibt die Festigkeit des Trägermaterials in vollem Umfang bestehen, so daß insbesondere auch eine geringere Querrißbildung im Trägermaterial auftritt.

Durch die erfindungsgemäße lösbare Befestigung der Schneid- bzw. Schleifelemente am Trägermaterial können diese auch bei Verschleiß ohne weiteres ausgewechselt werden. Dabei kann die Befestigung der Schneidelemente beispielsweise durch eine Schraubverbindung an der Halterung oder durch Befestigung an einem Tragseil erfolgen, wobei das Tragseil seitlich aus der Halterung herausschwenkbar ist.

Die Erfindung richtet sich vorwiegend auf den Einsatz der Bearbeitung von Konturen in harten Steinmaterialien wie Granit, Marmor o.dgl., z.B. in der Grabsteinbearbeitung. Bei Sägeseilen zur Verwendung in einer Bandsägemaschine ist es bekannt geworden, ringförmige diamantbestückte Schneidperlen oder Schneidhülsen auf einen seilförmigen Grundkörper aufzubringen. Sägeseile allein haben jedoch den Nachteil, daß sie keine seitliche Führung haben und nach hinten nur schlecht geführt sind, da sie sich in Längsrichtung infolge der nachgiebigen Verdrillung nicht optimal spannen lassen. Konturen lassen sich deshalb mit Sägeseilen allein nur bei Materialen mit dünnen Wandstärken, z.B. 2 bis 3 cm bearbeiten. Bei dickeren Wandstärken ist dies nur mit Bandsägeblättern möglich, da das flache und breite Trägermaterial zur guten Führung mit Richtungsstabilität beiträgt. Die erfindungsgemäße Bestückung eines Bandmaterials mit lösbaren Schneidelementen hat den Vorteil, daß zur Konturenbearbeitung die Vorteile des Sägeseiles mit denen des Bandsägeblatts verbunden werden können. Durch die zylinderförmige Grundgestalt der Schneidperlen lassen sich im Eintauch-Schneidverfahren ohne weiteres auch Radien leicht heraussägen.

Die Schneidperlen bzw. Schneidhülsen sind in ihrer Halterung oder auf dem Trägerseil fest oder drehbar gelagert. Letzteres hat den Vorteil, daß sich die Schneidperlen bei der Bearbeitung ständig drehen, so daß sie gleichmäßig abgenützt werden. Die Befestigung der Schneidperlen in der Halterung kann mittels einer Durchsteckschraube oder einem Durchsteckseil erfolgen, wobei das Seil seitlich aus der Halterung herausgeschwenkt werden kann.

Sofern eine feste Verbindung des Schneid- oder Schleifteils mit der Halterung verwendet wird, kann als Verbindung z.B. eine Sinterverbindung, eine Diffusionsschweiß-Verbindung, eine Elektronenschweißverbindung, eine Klebeverbindung oder Kunststoffeinbettung o.dgl. verwendet werden, wobei dann vorzugsweise die Halterung lösbar mit dem Trägermaterial verbunden ist, um die Austauschbarkeit des Schneidteils zu gewährleisten.

Die Halterung kann das Trägermaterial beidseitig mittels eines Schlitzes umschließen. Sie kann jedoch auch nur einseitig befestigt sein, wobei die Halterung in diesem Fall vorzugsweise abwechselnd links und rechts vom Trägermaterial befestigt ist.

Das Trägermaterial kann eine Aussparung aufweisen, in die die Halterung oder das Schneidelement selbst eingepaßt ist. Hierdurch wird die vorhandene Verbindung zwischen Halterung und Trägermaterial entlastet, da sich die Halterung formschlüssig am oder im Trägermaterial abstützen kann. Sofern die Aussparung zur Aufnahme des Schneidelements selbst dient, erfolgt die Halterung über ein Tragseil, welches sich seitlich der Aussparungen abstützt.

In den Unteransprüchen 8 und ff. ist die spezielle Beschaffenheit des Trägermaterials angegeben. Hierfür wird ein spezielles Material aus sog. Texturbandstahl verwendet, welches in einem speziellen Verfahren hergestellt ist. Ein derartiges Texturband ist von der Firma Kaltwalzwerk Brockhaus GmbH, 5970 Plettenberg 2 unter der Bezeichnung "Brockhaus PT-Band", Kaltband PT 120 blau LG, 0,6 bis 0,8 × 22 – 25 GK N DIN 1544 bekannt geworden. Die Festigkeit beträgt Rm ca. 1200 N/mm². Derartige Texturbänder werden in der Automobilbranche beispielsweise als Aufwickelfeder für Automatik-Sicherheitsgurte verwendet.

Die Besonderheit eines solchen Texturbandes besteht darin, daß die Faserstruktur durch den Herstellungsvorgang in Längsrichtung ausgerichtet ist, so daß das Band weitgehend unempfindlich ist gegen Kerbwirkung. Versuche haben gezeigt, daß ein derartiges Band etwa die doppelte Standzeit bei einem 90°-Biegeversuch aufweist, d.h. die Bildung von Querrissen ist infolge der ausgerichteten Längsstruktur wesentlich geringer, die Kerbschlagzähigkeit ist erhöht.

Mit einem derartigen Texturband als Bandsägeblatt lassen sich dann auch die herkömmlichen Verfahren zur Herstellung eines Diamantsägeblatts mit diamantbestückten Schneid- oder Schleifsegmenten anwenden.

Im Unteranspruch 9 sind die vorteilhaften Beschaffenheitsparameter des Texturbandmaterials angegeben, im Unteranspruch 10 die vorteilhafte Ausbildung als feste oder lösbare Schneid- oder Schleifelemente. Gemäß Unteranspruch 11 weist das Texturband-Sägeblatt eine eigene Zahnstruktur auf, um bei Materialien mit einer größeren Dicke Freiraum für das Bohrmehl zu schaffen.

Gemäß der vorteilhaften Weiterbildung nach Unteranspruch 12 wird als Trägermaterial eine endlose Kette verwendet, die um die Umlenkrollen einer Bandsägemaschine geführt ist, wobei mehrere abnehmbare Öffnungsglieder vorgesehen sind, die jeweils ein daran befestigtes Schneid- oder Schleifelement aufweisen. Derartige Ketten werden beispielsweise bei Baumsägen verwendet, wobei ebenfalls auswechselbare Schneidelemente vorgesehen sind. Dieses Prinzip wird sinngemäß auch für die Diamantbestückung eines Sägebands angewandt.

In vorteilhafter Ausgestaltung der Erfindung ist vorgesehen, daß eine Bandsägemaschine eine obere und untere Umlenkrolle aufweist, die in ihrem Querschnittsprofil genau dem umlaufenden Bandsägeblatt oder dem Kettensägeband angepaßt ist, d.h. das Sägewerkzeug ist in den Umlenkrollen eingebettet und kann nicht von diesem abspringen.

Sofern die Schneidelemente als auf einem Seil aufgezogene Schneidperlen ausgebildet sind, kann das Seil mit den Schneidperlen in Halterungen am Trägermaterial oder direkt in Aussparungen im Trägermaterial gelagert sein. Im letzteren Fall stützt sich das Seil seitlich der frei gelagerten Schneidelemente am Trägermaterial z.B. in U-förmigen Vertiefungen ab. Das Seil sollte jedenfalls nach Öffnen des Seilverschlusses als Ganzes vom Trägermaterial abnehmbar sein, d.h. die Halterungen sind einseitig offen ausgebildet.

Das Seil und ggf. die Schneidperlen können von einer Kunststoffummantelung umgeben sein, wobei die Ummantelung gleichzeitig als Abstandshalter für die Schneidperlen dient. Auf den Schneidperlen selbst reibt sich der Kunststoff im Betrieb sofort ab. Das Seil kann aber auch mit einer, die ganze Länge des Seils überdeckenden Spirale überzogen sein, auf der die Diamantbeschichtung der Schneidelemente als Segmente aufgetragen sind.

Besonders hervorzuheben ist die Ausbildung des Sägewerkzeugs nach Anspruch 18. Dadurch, daß das Sägewerezeug beidseitig mit Schneidelementen oder Schneidzähnen versehen ist, kann auch beim Rückwärtsziehen des Werkstückes geschnitten werden, was die Bearbeitungsmöglichkeiten erhöht.

Die Unteransprüche 19 und 20 stellen weitere vorteilhafte Verbindungsmöglichkeiten der Halterung mit dem Tägermaterial dar, wobei zur vereinfachten Herstellung das Trägermaterial und die Schneidperlen mit Halterung einfach mit Kunststoff umspritzt werden. In besonderer Ausgestaltung wird das Trägermaterial selbst durch den Kunststoff gebildet.

Weitere erfindungswesentliche Merkmale und Vorteile ergeben sich aus den nachfolgenden anhand der Zeichnung näher erläuterten Ausführungsbeispielen. Es zeigen

Fig. 1        ein als Bandsägeblatt ausgebildetes Sägewerkzeug mit Halterung und Schneidperlen,

Fig. 2        einen Schnitt längs der Schnittlinie I-I in Fig. 1 mit darunterliegender Umlenkrolle einer Bandsägemaschine,

Fig. 3        eine alternative Ausbildung eines fest mit der Halterung verbundenen Diamant-Schneid/Schleifelements auf einem bandförmigen Trägermaterial,

Fig. 4        ein Kettensägeband mit stirnseitig angebrachten diamantbestückten Schneid/Schleifelementen,

Fig. 5        ein Sägewerkzeug mit einem Seil zur befestigung der Schneidperlen,

Fig. 6 und 7    die Ausführungsform nach den Figuren 1 und 5 mit beidseitig des Trägermaterials angeordneten Schneid- bzw. Schleifelementen,

Fig. 8        ein Sägewerkzeug mit einer die Halterung und das Trägermaterial umfassenden Kunststoffeinbettung und

Fig. 9        ein aus Kunststoff gebildetes Trägermaterial.

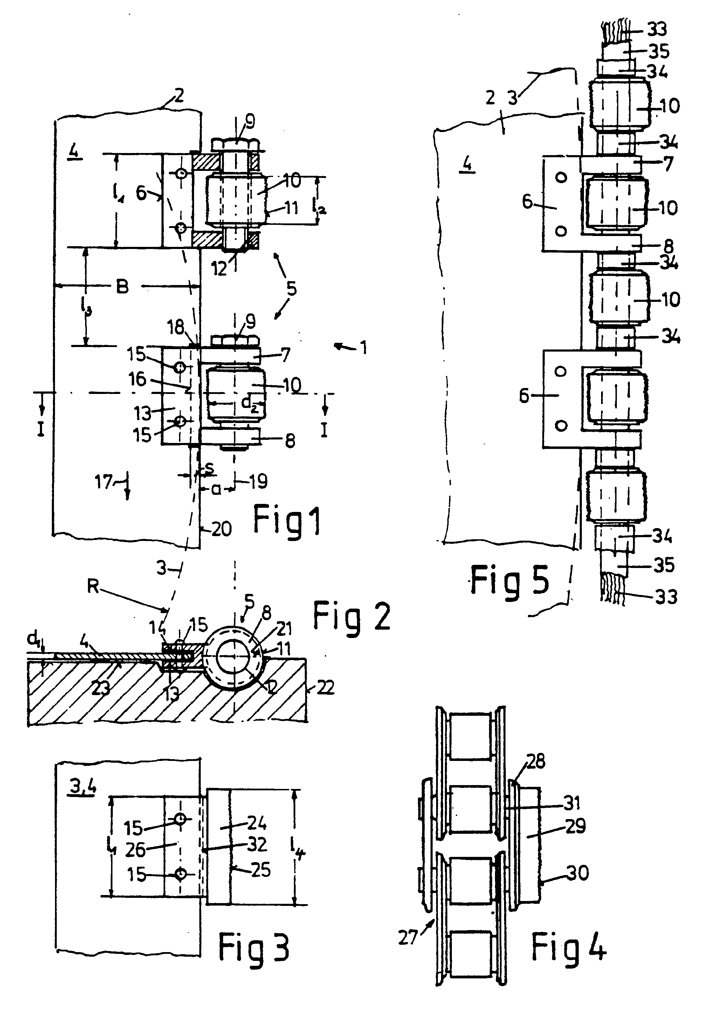

Das in Fig. 1 in Seitenansicht sowie in Fig. 2 in Draufsicht dargestellte Sägewerkzeug (1) für eine Bandsägemaschine ist als Bandsägeblatt (2) ausgebildet.

Das Bandsägeblatt (2) besteht aus einem bandförmigen Trägermaterial (4) aus Texturbandstahl wie nachfolgend näher noch beschrieben. Die Breite (B) des Trägermaterials (4) beträgt ca. 25 mm, die Dicke oder Stärke ($d_1$) ca. 0,5 bis 1 mm. Stirnseitig wird das Trägerband (4) mit Schneid- oder Schleifelementen (5) versehen, die segmentförmig hintereinander unter Bildung eines Zwischenraums angeordnet sind. Die Schneid- oder Schleifelemente (5) sind in einer, in Seitenansicht U-förmigen Halterung (6) angeordnet, dessen U-förmige Schenkel (7, 8) in Draufsicht einen kreisförmigen Querschnitt (21) aufweisen, wobei eine Durchsteckschraube (9) zur Befestigung einer diamantbestückten Schneidperle oder Schneidhülse (10) dient. Der untere Schenkel (8) weist ein Gewinde (12) für den Eingriff der Befestigungsschraube (9) auf. Die Befestigung der Schneidperle (10) kann derart erfolgen, daß sie fest zwischen den U-förmigen Schenkeln (7, 8) eingeklemmt oder lose zwischen diesen drehbar gelagert ist. Im letztgenannteren Fall erfolgt eine gleichmäßigere Abnutzung der diamantbestückten Schneidperlen. Die Schneidperlen weisen an ihrer Oberfläche eine aufgesinterte oder galvanisch aufgebrachte Diamantschicht (11) auf.

Der stirnseitige Verbindungsflansch (13) der Halterung (6) ist mit einem durchgehenden Schlitz (14) (s. Fig. 2) versehen, in den das Trägerband (4) eingreift, wobei der Schlitz (14) geringfügig breiter ist, als die Dicke ($d_1$) des Trägerbands (4). Eine doppelte Niet- oder Schraubverbindung (15) dient zur Befestigung des Verbindungsflansches (13) mit dem Trägerband (4). Die Halterung (6) kann auch aufgeklemmt, aufgepreßt oder aufgepunktet werden. Gleichermaßen kann der Verbindungsflansch (13) der Halterung (6) mit einem Kreissägeblatt (3) wie in Fig. 1 mit gestrichelter Linie angedeutet, verbunden werden.

Um eine Entlastung der Verbindung (15) zwischen Halterung (6) und Trägermaterial (3, 4) zu erhalten, kann das Trägermaterial im Bereich der aufzusteckenden Halterungen (6) mit einem Längseinschnitt (16) versehen sein, der etwa die Länge ($l_1$) aufweist, wie es der Länge des Verbindungsflansches (13) der Halterung (6) entspricht. Die schlitzförmige Aufnahme (14) des Verbindungsflansches (13) rutscht damit um den Betrag (s) in den Längseinschnitt (16) zur Mitte des Trägerbandes (4) und bildet eine Abstützschulter (18).

Sofern sich das Sägeband in Pfeilrichtung (17) nach unten bewegt, stützt sich die Halterung (6) an der oberen Schulter (18) mit der Breite (s) ab. Durch diese formschlüssige Einpassung der Halterung (6) in das Trägerband (4) werden die Verbindungen (15) in ihrer Scherbeanspruchung entlastet.

Die Länge ($l_1$) der Halterung beträgt etwa 15 mm, der Durchmesser der diamantbeschichteten Schneidperlen (10) $d_2 \sim 10$ mm, die Länge $l_2 \sim 7$ mm. Durch den Längseinschnitt (16) kann der Abstand (a) der Längsmittelachse (19) zur Stirnseite (20) des Trägerbands (4) klein gehalten werden, so daß sich eine geringe Momentenwirkung auf die Schneid- bzw. Schleifelemente (5) einstellt.

Der Abstand $(1_3)$ zwischen zwei Halterungen (6) beträgt das 1- bis 2-fache von $(1_1)$. Bei Sägeblättern, die einer geringen Biegung unterworfen sind, kann der Abstand kleiner gehalten werden, da die hierdurch eintretende Versteifung des Trägermaterials (2, 3) unschädlich ist. Bei endlosen Bandsägeblättern sollte der Abstand $(1_3 > 1_1)$ sein, um eine ausreichende Bipgsamkeit für das umlaufende Band zu gewährleisten.

In Fig. 2 ist der kreisförmige Querschnitt (21) des unteren Schenkels (8) gestrichelt dargestellt, der im Querschnitt gleich ausgebildet ist, wie der obere Schenkel (7).

In Fig. 2 ist weiterhin ein Querschnitt einer erfindungsgemäßen oberen und unteren Umlenkrolle (22) einer nicht näher dargestellten Bandsägemaschine dargestellt. Die obere und die untere Umlenkrolle weist eine äußere Kontur (23) auf, die genau der Formgebung des Trägerbandes (4) mit angeflanschter Halterung (6) und daran befestigtem Schneidelement (5) angepaßt ist, d.h. das umlaufende Sägewerkzeug ist in die Außenkontur (23) der Umlenkrolle (22) eingebettet. Hierdurch kann das Sägewerkzeug nicht von der Umlenkrolle herabspringen und das Band läuft sehr ruhig.

In Fig. 3 ist eine alternative Ausführungsform der Erfindung dargestellt. Anstelle der lose einzuschraubenden Schneidperlen (10) in Fig. 1, 2 ist in Fig. 3 ein längliches, quaderförmiges Schneid- bzw- Schleifelement (24) mit Diamantoberfläche (25) und einer Länge $1_4 \approx 20$ mm fest mit einer Halterung (26) verbunden. Da es sich bei dem Schneid/Schleifelement (24) um ein teueres Antragswerkzeug handelt, wird im allgemeinen als Halterung (26) ein billigeres Material, z.B. Stahl oder Kupfer verwendet, welches sich einfach mit dem Schneidelement (24) verbinden läßt. Die Verbindung (32) ist als Lötverbindung, Sinterverbindung, Diffusionsschweißverbindung oder Elektronenstrahlschweißverbindung ausgebildet. Maßgeblich ist die lösbare Befestigung der Halterung (26) mit dem Trägerband (4), wobei vorzugsweise eine Schraub- oder Nietverbindung (15) mit einer analogen Befestigung wie in Fig. 1, 2 beschrieben, verwendet wird. Die Teile (26, 24) können auch einstückig ausgebildet sein.

Im Ausführungsbeispiel der Erfindung nach Fig. 1 bis 3 ist als Trägermaterial ein Trägerband (4) aus Texturbandstahl verwendet, wie es die Firma Kaltwalzwerk Brockhaus unter der in der Beschreibungseinleitung bezeichnenden Art mit der Qualitätsbezeichnung "PS 90" anbietet. Das TexturbandSägeblatt hat eine Zusammensetzung von etwa 0,85 bis 0,9% Kohlenstoff, von 0,15 bis 0,30% Silizium, von 0,3 bis 0,6% Mangan und maximal 0,02% Phosphor und Schwefel. Die Festigkeitswerte liegen zwischen 1.500 und 2.100 N/mm$^2$.

Das besondere Gefüge des Texturbandstahls zeichnet sich durch eine längsorientierte Faserstruktur aus, die durch ein besonderes Walzverfahren in einer Warmverformung mit einer sehr langsamen Abkühlung erfolgt. Durch ein spezielles Anlaßverfahren bei 240°C bei einer Dauer von ca. 30 Min. kann die Festigkeit auf über 2.100 N/mm$^2$ gesteigert werden. Die längsorientierte Faserstruktur verhält sich wie die Einzelseile in einem Seil oder die Längsfasern in Holz, so daß eine außerordentlich hohe Widerstandsfähigkeit gegen Knicken bei der Konturenbearbeitung gegeben ist und Querrisse kaum noch auftreten können. Insofern kann der Längseinschnitt (16) zur formschlüssigen Einpassung der Halterung (6, 26) trotz Kerbwirkung ohne weiteres vorgenommen werden.

Die Ausbildung der Erfindung nach Fig. 4 sieht vor, daß eine Kette (27) als Trägermaterial bzw. als endlos umlaufendes Kettensägeband verwendet wird. Derartige Ketten werden beispielsweise auch bei Baumssägen als umlaufende Ketten verwendet.

Erfindungsgemäß ist vorgesehen, daß mehrere stirnseitig angeordnete, über eine Steckverbindung (31) abnehmbare Öffnungsglieder oder Kettenschlösser (28) vorgesehen sind, die üblicherweise als Verbindungsglieder zwischen den beiden Enden einer Kette verwendet werden. Dieses längliche Kettenschloß (28) entspricht der Halterung (26) in Fig. 3, d.h. es dient als Halterung für ein Schneid- bzw. Schleifelement (29) mit Diamantoberfläche (30). Durch Austausch der Kettenschlösser (28) können demnach auch die Schneid/Schleifelemente (29) ausgetauscht werden.

In Fig. 5 ist eine alternative Ausführungsform zur Fig. 1 gezeigt. bestelle der Durchsteckschrauben (9) in Fig. 1 werden die Schneidperlen bzw. Schneidhülsen (10) in Fig. 5 mittels eines durchgehenden Seils (33) gehalten. Dieses Seil (33) ist bei einem Bandsägeblatt endlos und an einer Stelle mittels eines nicht näher dargestellten Seilschlosses bzw. Spannschlosses geschlossen.

Wie in Fig. 5 dargestellt, läuft das Seil (33) zwischen den einzelnen Halterungen (6) hindurch, so daß auch zwischen diesen Halterungen (6) wenigstens eine Schneidperle (10) angeordnet sein kann. Damit die Schneidperlen (10) in ihrer axialen Lage fixiert sind, sind Abstandshülsen (34) beidseitig der Schneidperle (10) vorgesehen.

Das Seil (33) ist vorzugsweise mit einer Kunststoffummantelung (35) versehen, damit keine Reibung zwischen der Schneidhülse (10) und dem Seil (33) und damit geringerer Verschleiß eintritt. Die Kunststoffummantelung kann gleichzeitig zur Fixierung der Schneidperlen in ihrer Lage, d.h. als axialer Abstandshalter dienen. Das Seil 33 kann aber auch als Ummantelung eine nicht näher dargestellte Drahtspirale aufweisen, auf die die Schneidelemente durch Beschichtung aufgebracht sind.

Durch die Ausbildung der Erfindung nach Fig. 5 werden die Vorteile einer Seilsäge mit der einer Bandsäge verbunden. Maßgeblich ist auch die Auftrennbarkeit des Seils, damit die einzelnen Schneidperlen (10) oder die durchgehende Drahtspirale ersetzt werden können. Die beiden Schenkel (7, 8) der Halterung (6) in Fig. 5 sind ggf. nicht kreisförmig geschlossen, sondern nach vorne hin offen, d.h. U-förmig ausgebildet, damit das komplette Seil nach vorne hin abgenommen werden kann. Dies vereinfacht die Montage beim Auswechseln des Seils erheblich.

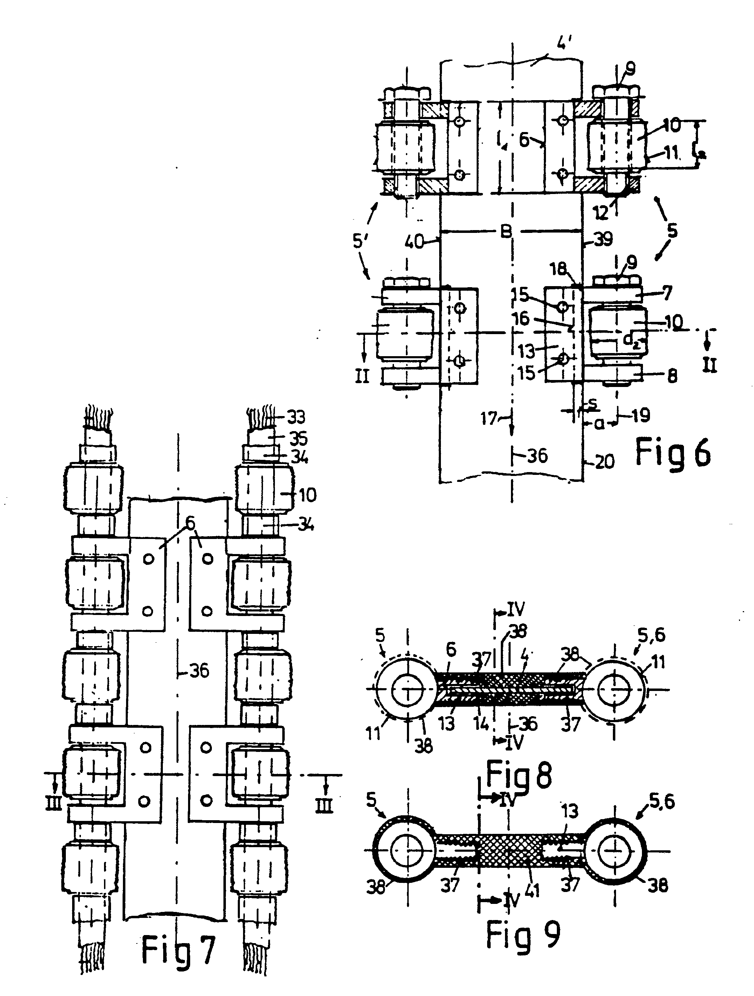

Bei dem in Fig. 6 und 7 dargestellten Ausführungsbeispiel handelt es sich um eine Ausführungsform entsprechend den Figuren 1 und 5, wobei das Trägermaterial, insbesondere das Texturband (4') beidseitig (39, 40) Schneid- bzw. Schleifelemente (5 bzw. 5') aufweist. Ein an einer Bandsägemaschine umlaufendes Bandsägeblatt weist hierdurch zwei Schneidflächen auf. Das zu sägende Material wird beispielsweise zunächst gegen das Bandsägeblatt geschoben und von den an der vorderen Stirnseite (39) angeordneten Schneidelementen (5) geschnitten. Beim Zurückziehen des Werkstücks können dann die an der hinteren Stirnseite (40) angeordneten Schneidelemente (5') des Sägewerkzeugs verwendet werden, so daß das Bandsägeblatt nicht entlang der bisherigen Schnittlinie aus dem Werkstück herausgeführt werden braucht. Hierdurch ergeben sich völlig neue Möglichkeiten zur Durchführung von Figurenschnitten innerhalb des Werkstücks.

Durch die doppelte Belegung des Bandsägeblatts mit Schneidelementen an beiden Stirnseiten ergibt sich auch die Möglichkeit, daß Werkstückaußenkonturen geschliffen oder poliert werden können. Dies geschieht dadurch, daß die zu bearbeitende Werkzeugkontur entlang der beiden stirnseitigen Schneidelementen (5, 5') tangential herangeführt wird. Durch die beidseitige Auflage am vorderen (5) und hinteren (5') Schneidelement wird eine Verkantung oder ein unrundes Laufen des Bandsägeblatts vermieden.

Das Bandsägeblatt (4') nach Fig. 6 ist zu seiner Längsachse (36) symmetrisch aufgebaut. Die Schneidelemente (5') sind in gleicher Weise mit dem Trägermaterial (4') verbunden, wie dies zu Fig. 1 beschrieben ist.

Das gleiche gilt für das in Fig. 7 dargestellte Ausführungsbeispiel, mit einer symmetrischen Anordnung, wie sie in Fig. 5 dargestellt und beschrieben ist. Hier ist ebenfalls das Trägermaterial (4') an beiden Stirnseiten mit einer Schneidanordnung versehen. Gleiche Teile sind deshalb mit gleichen Bezugszeichen versehen. Durch die stirnseitig offenen Halterungen (6) können die Seile einschließlich Schneidelemente komplett abgenommen werden.

Fig. 8 zeigt einen Schnitt längs der Schnittlinie II-II in Fig. 6 oder III-III in Fig. 7. Sinngemäß läßt sich Fig. 8 jedoch auch auf Fig. 1 bzw. 5 mit nur auf einer Seite angeordnetem Schneidelement ausbilden. Ähnlich wie zu Fig. 2 beschrieben, weist die Halterung (6) auch hier einen U-förmigen Verbindungsflansch (13) auf, der einen Schlitz (14) bildet, zur Aufnahme des Trägermaterials (4). Anstelle der Nietverbindung (15) in Fig. 2, weist die Halterung (6) an seiner äußeren Fläche beispielsweise eine zackenförmige oder sonstige geeignete Kontur (37) auf, die als formschlüssiges Verbindungselement dient. Hierzu wird die Verbindung zwischen dem Band (4) und der Halterung (6) dadurch bewerkstelligt, daß eine Kunststoffummantelung (38) vorgesehen ist, die die Teile der Halterung (6) und des Trägermaterials (4') vollständig umgibt. Die zackenförmige Außenkontur (37) der Halterung (6) dient dabei als formschlüssiges Verbindungselement.

Die Kunststoffummantelung (38) kann das komplette Sägewerkzeug nach dem Herstellungsvorgang umgeben. Nach Aufstecken der Halterungen (6) wird der Rohling nur noch mit der Kunststoffummantelung versehen, um das Werkzeug herzustellen. Die Schneidelemente können vor oder nach der Kunststoffummantelung in die Halterung eingebracht werden. Das nachträgliche Bestücken gilt insbesondere für das komplette Sägeseil. Das Sägewerkzeug kann mit einem 1 bis 2 mm starken Kunststoffüberzug bedeckt sein, wobei die eigentliche Schneidfläche des Schneidelements zunächt auch mit Kunststoff überzogen sein kann. Dieser Kunststoffauftrag wird jedoch beim ersten Einsatz sofort abgeschliffen, so daß die Schneidkontur der Schneidperlen (10) mit Diamantschicht (11) freigelegt wird.

Durch diese Art der Verbindung wird der Herstellungsprozeß des Sägewerkzeugs stark vereinfacht und verbilligt. Er läßt sich selbstverständlich auch auf die Ausführungsbeispiele nach Fig. 1 bis 3, 5 anwenden.

Eine Weiterbildung der Erfindung nach Fig. 8 ist in Fig. 9 dargestellt. Hier wird das Trägerbandmaterial (4) in Fig. 8 Komplett durch ein Kunststoffträgermaterial (41) ersetzt oder gebildet. Die Halterungen (6) werden in einer speziellen Gießform mit ihrem Verbindungsflansch (13) komplett mit einem Kunststoffüberzug (41) versehen, wobei wiederum durch zackenförmige Außenkonturen (37) am Verbindungsflansch (13) eine formschlüssige Verbindung geschaffen wird. Das Kunststoffträgermaterial (41) kann glasfaserverstärkt sein und hat dann ebenfalls die Aufgabe der Führung des Sägewerkzeugs wie das Metallband (4). Die Schneidperlen können vor oder nach dem Spritzvorgang eingesetzt werden. Die Halterung (6) ist hierfür ebenfalls stirnseitig offen, damit ein Seil mit Schneidelementen einsetzbar ist. Die Ausführung nach Fig. 9 ist besonders hinsichtlich des Fertigungsaufwandes sehr vorteilhaft, da die Teile nur noch umspritzt werden müssen. Entsprechend der in Fig. 8 und 9 eingezeichneten Trennlinie IV-IV kann das Sägewerkzeug auch asymmetrisch entsprechend Fig. 1, 2 oder 5 ausgebildet sein.

## Patentansprüche

1. Bandsägemaschine zur Bearbeitung von Steinmaterialien aus Granit, Marmor o.dgl. mit einem endlosen, flachen, in Schnittrichtung weitgehend biegesteifen Bandsägewerkzeug (1), welches flachaufliegend über eine obere und untere Umlenkrolle (22) geführt ist und an seiner stirnseitigen Schnittfläche (20) Schneid- bzw. Schleifelemente (5, 24, 29) aufweist, wobei der Schnittdruck auf das Bandsägewerkzeug (1) über die biegesteife Stirnseite (20) des Werkzeugs kompensierbar ist, dadurch gekennzeichnet, daß das als flaches Trägerband (4) oder als Kette (27) ausgebildete Bandsägewerkzeug (1) an seiner biegesteifen Stirnseite (20) Schneid- bzw. Schleifelemente (5, 24, 29) aufweist, die mittels Halterungen (6, 26, 28) am Trägerband (4) bzw. an der Kette (27) gehalten sind.

2. Bandsägemaschine nach Anspruch 1, dadurch gekennzeichnet, daß die Halterung (6, 26) mittels eines in Draufsicht schlitzförmigen bzw. U-förmigen oder L-förmigen Verbindungsflansches (13) mit dem als Bandsägeblatt (2) ausgebildeten Trägermaterial (4) befestigt ist oder daß das Trägermaterial (41) den Anschlußflansch (13) der Halterung (6) umschließt.

3. Bandsägemaschine nach Anspruch 1 oder 2, dadurch gekennzeichnet, daß die Halterung (6) am Trägermaterial (4) in Seitenansicht U-förmig ausgebildet ist, zur Aufnahme eines Schneidelements (10) mittels einer Durchsteckverbindung (9) oder mittels eines durchgehenden Seils (33).

4. Bandsägemaschine nach Anspruch 1, dadurch gekennzeichnet, daß das Schneid- oder Schleifelement (5, 24) fest mit der Halterung (6, 26) und die Halterung (6, 26) lösbar mit dem Trägermaterial (4, 3) oder umgekehrt verbunden ist.

5. Bandsägemaschine nach Anspruch 1, dadurch gekennzeichnet, daß das Trägermaterial (3, 4) eine stirnseitige Aussparung (16) aufweist, in der die Halterung (6, 26) angeordnet ist.

6. Bandsägemaschine nach Anspruch 1, dadurch gekennzeichnet, daß die Halterungen (6) für die Schneidelemente (10) stirnseitig offen ausgebildet sind, zur seitlichen Herausnahme von vorzugsweise auf einem Seil aufgereihten Schneidelementen.

7. Bandsägemaschine nach einem oder mehreren der vorhergehenden Ansprüche, dadurch gekennzeichnet, daß als Bandmaterial für ein Bandsägeblatt ein Texturbandstahl mit einer durch ein Walzverfahren längs orientierten Faserstruktur verwendbar ist.

8. Bandsägemaschine nach Anspruch 7, dadurch gekennzeichnet, daß das Texturband-Sägeblatt eine Zusammensetzung von etwa 0,85 bis 0,9% Kohlenstoff (C), 0,15 bis 0,3% Silizium (Si), 0,3 bis 0,6% Mangan (Mn) und maximal 0,02% Phosphor und Schwefel aufweist, bei Festigkeitswerten von ca. 1.500 bis 2.100 $N/mm^2$.

9. Bandsägemaschine nach Anspruch 7 oder 8, dadurch gekennzeichnet, daß das Texturband-Sägeblatt als diamantbestücktes Sägeband mit fest oder lösbar aufgebrachten bzw. befestigten Schneid- bzw. Schleifelementen bzw. Schneid- oder Schleifsegmenten ausgebildet ist.

10. Bandsägemaschine nach Anspruch 1, dadurch gekennzeichnet, daß als Trägermaterial eine Rollenkette (27) o.dgl. verwendbar ist, wobei mehrere abnehmbare Öffnungsglieder (28) bzw. Kettenschlösser (28) mit fest damit verbundenen Schneid- bzw. Schleifelementen (29) mit Diamantoberfläche (30) vorgesehen sind.

11. Bandsägemaschine nach Anspruch 1, dadurch gekennzeichnet, daß die obere und/oder untere Umlenkrolle (22) ein Querschnittsprofil (23) aufweist, in welches das Trägerband (4) oder das Kettensägeband mit stirnseitig befestigter Halterung (6, 26, 28) und daran befestigten Schneid- bzw. Schleifelementen (10, 24, 29) formschlüssig eingebettet ist.

12. Bandsägemaschine nach Anspruch 3, dadurch gekennzeichnet, daß die als Schneidperlen bzw. Schneidhülsen (10) ausgebildeten Schneidelemente mittels eines durchgehenden Seils (33) in der Halterung (6) gelagert sind.

13. Bandsägemaschine nach Anspruch 12, dadurch gekennzeichnet, daß die Lage der Schneidperlen (10) auf dem Seil (33) durch Abstandshülsen (34) oder durch eine Kunststoffeinbettung oder -umhüllung fixiert ist.

14. Bandsägemaschine nach Anspruch 12, dadurch gekennzeichnet, daß die Schneidelemente (5) auf einer Drahtspirale in Segmenten aufgebracht sind, wobei die Drahtspirale über das Tragseil (33) aufgezogen ist.

15. Bandsägemaschine nach einem oder mehreren der vorhergehenden Ansprüche, dadurch gekennzeichnet, daß das Seil (33) oder das Seil (33) und die Schneidelemente (5) oder das Seil (33), die Schneidelemente (5) und die Halterung (6) einschließlich Trägermaterial (4) eine Kunststoffummantelung (35, 38) aufweisen, zur Herstellung einer kraft- und/oder formschlüssigen Verbindung.

16. Bandsägemaschine nach einem oder mehreren der vorhergehenden Ansprüche, dadurch gekennzeichnet, daß das umlaufende Bandsägeblatt (4') an einer vorderen und hinteren Stirnseite (39, 40) an das Bandmaterial angesetzte Schneidelemente (5) aufweist.

17. Bandsägemaschine nach Anspruch 15, dadurch gekennzeichnet, daß der Kunststoffüberzug (38) im Bereich der Schneidfläche der Schneidelemente (5) durch Benutzung abtragbar ist.

18. Bandsägemaschine nach einem oder mehreren der vorhergehenden Ansprüche, dadurch gekennzeichnet, daß das Trägermaterial aus Kunststoff oder glasfaserverstärktem Kunststoff (41) besteht, wobei der Kunststoffüberzug die Halterung (6) und ggf. das Schneidelement (5) umschließt.

## Claims

1. Mechanical band saw for machining stone materials of granite, marble or the like, having an endless, flat band saw tool (1) largely rigid in the cutting direction, which is guided, lying flatly thereon, over an upper and lower deflector roller (22) and comprises cutting or grinding elements (5, 24, 29) on its end cutting face (20), the cutting pressure upon the band saw tool (1) being compensatable by means of the rigid end side (20) of the tool, characterised in that the band saw tool (1), formed as flat carrier band (4) or as chain (27), comprises on its rigid end (20) cutting or grinding elements (5, 24, 29), which are held on the carrier band (4) or on the chain (27) by means of retainers (6, 26, 28).

2. Mechanical band saw according to Claim 1, characterised in that the retainer (6, 26) is secured by means of a connection flange (13), of slot-shaped, U-shaped or L-shaped plan view, with the carrier material (4) formed as band saw blade (2), or in that the carrier material (41) surrounds the attachment flange (13) of the retainer (6).

3. Mechanical band saw according to Claim 1 or 2, characterised in that the retainer (6) on the carrier material (4) is of U-shaped formation in lateral view, for the reception of a cutting element (10) by means of a push-through connection (9) or by means of a continuous cable (33).

4. Mechanical band saw according to Claim 1, characterised in that the cutting or grinding element (5, 24) is firmly connected with the retainer (6, 26) and the retainer (6, 26) is detachably connected with the carrier material (4, 3), or vice versa.

5. Mechanical band saw according to Claim 1, characterised in that the carrier material (3, 4) comprises an end aperture (16) in which the retainer (6, 26) is arranged.

6. Mechanical band saw according to Claim 1, characterised in that the retainers (6) for the cutting elements (10) are made open at the end, for the lateral withdrawal of cutting elements arranged in a row preferably on a cable.

7. Mechanical band saw according to one or more of the preceding Claims, characterised in that a textured band steel with a fibre structure longitudinally oriented by a rolling process is usable as band material for a band saw blade.

8. Mechanical band saw according to Claim 7, characterised in that the texture band saw blade has a composition of about 0.85 to 0.9% carbon (C), 0.15 to 0.3% silicon (Si), 0.3 to 0.6% manganese (Mn) and a maximum of 0.02% phosphorus and sulphur, with strength values of app. 1,500 to 2,100 N/sq.mm.

9. Mechanical band saw according to Claim 7 or 8, characterised in that the textured band saw blade is formed as diamond-set saw band with fixedly or detachably applied or secured cutting or grinding elements or cutting or grinding segments.

10. Mechanical band saw according to Claim 1, characterised in that a roller chain (27) or the like can be used as carrier material, and several removable opening links (28) or chain locks (28) with cutting or grinding elements (29) firmly connected therewith, with diamond surface (30) are provided.

11. Mechanical band saw according to Claim 1, characterised in that the upper and/or the lower deflector roller (22) has a cross-sectional profile (23) into which the carrier band (4) or the chain saw band with terminally secured retainer (6, 26, 28) and cutting or grinding elements (10, 24, 29) secured thereto is embedded in shape-engaging manner.

12. Mechanical band saw according to Claim 3, characterised in that the cutting elements, formed as cutting beads or as cutting sleeves (10) are mounted in the retainer (6) by means of a continuous cable (33).

13. Mechanical band saw according to Claim 12, characterised in that the position of the cutting beads (10) on the cable (33) is fixed by spacer sleeves (34) or by a synthetic plastics material embedding or jacketing.

14. Mechanical band saw according to Claim 12, characterised in that the cutting elements (5) are fitted in segments on a wire spiral, the wire spiral being tightened by means of the carrier cable (33).

15. Mechanical band saw according to one or more of the preceding Claims, characterised in that the cable (33), or the cable (33) and the cutting elements (5), or the cable (33), the cutting elements (5) and the retainer (6) including carrier material (4) comprises or comprise a synthetic plastics material jacketing (35, 38), for the production of a connection locking by virtue of force application and/or shape.

16. Mechanical band saw according to one or more of the preceding Claims, characterised in that the circulating band saw blade (4') comprises, on a front and a rear end face (39, 40), cutting elements (5) applied to the band material.

17. Mechanical band saw according to Claim 15, characterised in that the synthetic plastic material coating (38) can be worn away by use in the region of the cutting face of the cutting elements (5).

18. Mechanical band saw according to one or more of the preceding Claims, characterised in that the carrier material consists of synthetic plastics material or of glass-fibre-reinforced synthetic plastics material (41), and the synthetic plastics material coating surrounds the retainer (6) and possibly the cutting element (5).

## Revendications

1. Machine de sciage pour le façonnage de matériaux pierreux en granit, marbre ou analogue, comportant une scie à ruban (1) sans fin, plane, largement rigide à la flexion dans la direction de coupe, laquelle est guidée, à plat, sur des galets de renvoi supérieur et inférieur (22) et comporte, sur sa surface de coupe frontale (20), des éléments de coupe ou d'abrasion (5, 24, 29), la pression de coupe sur la scie à ruban (1) pouvant être compensée par la surface d'attaque (20) rigide à la flexion de l'outil, caractérisée en ce que la scie à ruban (1), réalisée sous forme de chaîne (27) ou de bande de support plane (4), présente, sur sa surface d'attaque (20) rigide à la flexion, des éléments de coupe ou d'abrasion (5, 24, 29), qui sont maintenus sur la bande de support (4) ou la chaîne (27) par des attaches (6, 26, 28).

2. Machine de sciage selon la revendication 1, caractérisée en ce que l'attache (6, 26) est fixée au matériau de support (4), réalisé en tant que lame de scie (2), au moyen d'une bride d'assemblage (13) en forme de L, ou en forme de U, ou en forme de fente en plan, ou en ce que le matériau de support (41) entoure la bride d'assemblage (13) de l'attache (6).

3. Machine de sciage selon la revendication 1 ou 2, caractérisée en ce que l'attache (6) sur le matériau de support (4) est réalisée en forme de U en vue de côté, pour la réception d'un élément de coupe (10) au moyen d'une liaison traversante (9) ou au moyen d'un câble continu (33).

4. Machine de sciage selon la revendication 1, caractérisée en ce que l'élément de coupe ou d'abrasion (5, 24) est relié rigidement à l'attache (6, 26) et l'attache (6, 26) est reliée de façon amovible au matériau de support (4, 3), ou inversement.

5. Machine de sciage selon la revendication 1, caractérisée en ce que le matériau de support (3, 4) comporte un évidement frontal (16), dans lequel l'attache (6, 26) est agencée.

6. Machine de sciage selon la revendication 1, caractérisée en ce que les attaches (6) pour les éléments de coupe (10) sont réalisées en étant ouvertes frontalement, pour l'enlèvement latéral des éléments de coupe avantageusement enfilés sur un câble.

7. Machine de sciage selon une ou plusieurs des revendications précédentes, caractérisée en ce que, en tant que matériau en bande pour une lame de scie, on peut utiliser un feuillard d'acier texturé ayant une structure de fibres orientée longitudinalement par laminage.

8. Machine de sciage selon la revendication 7, caractérisée en ce que la lame de scie texturée présente une composition d'environ 0,85 à 0,9% de carbone (C), 0,15 à 0,3% de silicium (Si), 0,3 à 0,6% de manganèse (Mn) et au plus 0,02% de phosphore et de soufre, pour des valeurs de résistance d'environ 1500 à 2100 N/mm$^2$.

9. Machine de sciage selon la revendication 7 ou 8, caractérisée en ce que la lame de scie texturée est réalisée en tant que lame de scie diamantée comportant des éléments de coupe ou d'abrasion, ou des segments de coupe ou d'abrasion, fixés ou mis en place de façon amovible ou non.

10. Machine de sciage selon la revendication 1, caractérisée en ce que, en tant que matériau de support, on peut utiliser une chaîne à rouleaux (27) ou analogue, plusieurs organes d'ouverture (28) ou joints de chaîne (28) démontables à éléments de coupe ou d'abrasion (29), solidaires de ceux-ci, à surface diamantée (30) étant prévus.

11. Machine de sciage selon la revendication 1, caractérisée en ce que les galets de renvoi (22) supérieur et/ou inférieur présentent un profil en section transversale (23), dans lequel la bande de support (4) ou la bande de scie à chaîne à attache (6, 26, 28) fixée latéralement et éléments de coupe ou d'abrasion (10, 24, 29) fixés à celle-ci est encastrée mécaniquement.

12. Machine de sciage selon la revendication 3, caractérisée en ce que les éléments de coupe, réalisés en tant que perles de coupe ou douilles de coupe (10), sont montés dans l'attache (6) au moyen d'un câble continu (33).

13. Machine de sciage selon la revendication 12, caractérisée en ce que la position des perles de coupe (10) sur le câble (33) est fixée par des douilles d'écartement (34) ou par une enveloppe ou un enrobage de matière synthétique.

14. Machine de sciage selon la revendication 12, caractérisée en ce que les éléments de coupe (5) sont agencés, en segments, sur une spirale de fil métallique, la spirale de fil métallique étant tirée par l'intermédiaire

9

du câble (33).

15. Machine de sciage selon une ou plusieurs des revendications précédentes, caractérisée en ce que le câble (33), ou le câble (33) et les éléments de coupe (5), ou le câble (33), les éléments de coupe (5) et l'attache (6) y compris le matériau de support (4), présentent une enveloppe de matière synthétique (35, 38), pour réaliser une liaison mécanique et/ou par adhérence.

16. Machine de sciage selon une ou plusieurs des revendications précédentes, caractérisée en ce que la lame de scie rotative (4') présente, sur une face frontale avant et arrière (39, 40), des éléments de coupe (5) disposés sur le matériau en bande.

17. Machine de sciage selon la revendication 15, caractérisée en ce que l'enveloppe de matière synthétique (38), dans la zone de la surface de coupe des éléments de coupe (5), peut être enlevée à l'usage.

18. Machine de sciage selon une ou plusieurs des revendications précédentes, caractérisée en ce que le matériau de support est constitué de matière synthétique ou de matière synthétique (41) renforcée de fibres de verre, le revêtement de matière synthétique entourant l'attache (6) et, le cas échéant, l'élément de coupe (5).

Fig 1

Fig 2

Fig 3

Fig 4

Fig 5

Fig 6

Fig 7

Fig 8

Fig 9